# EUROPÄISCHE PATENTSCHRIFT

(11) **EP 1 647 425 B1**
(45) Veröffentlichungstag und Bekanntmachung des Hinweises auf die Patenterteilung: **19.05.2010**
(21) Anmeldenummer: 05021986.4
(22) Anmeldetag: 08.10.2005
(51) Int. Cl.: B60G 17/052

(54) **Steuervorrichtung für eine Luftfederungsanlage für ein Kraftfahrzeug**
Control device for a pneumatic suspension system for a vehicle
Dispositif de commande de système de suspension pneumatique pour véhicule

(30) Priorität: 12.10.2004 DE 102004049542
(43) Veröffentlichungstag der Anmeldung: 19.04.2006
(73) Patentinhaber: Haldex Brake Products GmbH, 69123 Heidelberg (DE)
(72) Erfinder: Heer, Siegfied, 69168 Wiesloch (DE)
(74) Vertreter: Rehberg Hüppe + Partner

(56) Entgegenhaltungen:
- EP-A- 1 502 778
- DE-A1- 3 815 614
- DE-A1- 4 227 084
- DE-A1- 10 245 815

## Beschreibung

Die Erfindung betrifft eine Steuervorrichtung für eine Luftfederungsanlage für ein Kraftfahrzeug gemäß dem Oberbegriff des Anspruchs 1.

### STAND DER TECHNIK

Aus der gattungsbildenden DE 102 45 815 A1 ist eine Steuervorrichtung für eine Luftfederungsanlage für ein Kraftfahrzeug bekannt. Die Steuervorrichtung wird hier von einem Modul mit einem geschlossenen Gehäuse aus einem Gehäuseoberteil und einem Gehäuseunterteil gebildet. In dem Gehäuseoberteil ist elektrische Steuereinheit, ein elektrisches Vorsteuerventil und ein Drucksensor angeordnet. In dem Gehäuseunterteil ist ein pneumatisches Schaltventil untergebracht. Weiterhin sind einzelne Module aufgezeigt, die z.B. der Vorderachse, der Hinterachse und einer Liftachse zugeordnet sind. Jeder Modul weist eine eigene elektrische Steuereinheit, einen Drucksensor und ein elektrisch ansteuerbares pneumatisches 3/2-Wegeventil auf. Die Versorgung der 3/2-Wegeventile mit Druckluft erfolgt über zu den einzelnen Modulen geführte Leitungen. Durch eine derartige Modulbauweise soll eine Reduzierung des Installationsaufwandes der einzelnen Systemkomponenten einer Druckluftsteuervorrichtung und der eine Verbindung der Systemkomponenten betreffende Verrohrungs- und Verkabelungsaufwand durch die Integration obiger Systemkomponenten in einem Modul reduziert werden. Weiterhin soll die Anzahl der Steckverbindungen zwischen den einzelnen Kabelleitungen reduziert werden gegenüber dem Stand der Technik. Darüber hinaus sollen die Kosten bei der Fahrzeugherstellung minimiert werden.

Aus der EP 1 502 778 A1 ist eine Druckluftaufbereitungseinrichtung für Kraftfahrzeug-Druckluftanlagen in modularer Bauweise bekannt. Ein erster Modul nimmt den Druckregler, den Lufttrockner, das Kompressorsteuerventil, das Sicherheitsventil, das Regenerationsventil und das Rückschlagventil der Zentralbelüftung auf. In einem zweiten Modul sind die Überströmventile des Mehrkreisschutzventils und die Drucksensoren zusammengefasst. Ein dritter Modul nimmt eine elektrische Steuereinheit und elektrisch steuerbare Vorsteuerventile auf. In einem vierten Modul sind pneumatische Schaltventile und ein Drucksensor angeordnet. Die pneumatische Verbindung der einzelnen Module geschieht über Leitungen.

Aus der DE 195 46 324 C2 ist ein Steuerblock für eine Luftfederungsanlage für Fahrzeuge bekannt, in welchen eine elektrische Steuervorrichtung, Magnetventile und geeignete Verbindungsleitungen integriert sind. Weiterer Stand der Technik ist aus DE 44 16 279 A1, DE 38 15 614 A1, DE 38 15 612 A1 und DE 33 45 928 A1 bekannt.

### AUFGABE DER ERFINDUNG

Der vorliegenden Erfindung liegt die Aufgabe zugrunde, unter Beachtung der notwendigen Leitungsverbindungen eine einfache, zuverlässige und funktionsgerechte Verbindung von Bauteilen einer Steuervorrichtung für eine Luftfederungsanlage für ein Kraftfahrzeug vorzuschlagen.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Erfindungsgemäß findet zunächst ein von einer Steuereinheit angesteuertes Vorsteuerventil Einsatz. Bei einem derartigen Vorsteuerventil kann es sich um ein beliebiges elektrisch steuerbares Schaltventil handeln, mittels dessen nach Maßgabe eines elektrischen Steuersignals ein Vorsteuerdruck beeinflusst werden kann. Lediglich beispielhaft wird hier ein pulsweitenmoduliertes Schaltventil oder ein Vorsteuermagnetventil genannt. Ein solches Vorsteuerventil kann auf besonders einfache Weise unter vielfältigen Ansteuerungsmöglichkeiten angesteuert werden.

Ein Ausgangs- oder Steuerdruck des elektrisch angesteuerten Vorsteuerventils wird dem pneumatischen Schaltventil zugeführt, welches wiederum mit der Luftfederungsanlage des Kraftfahrzeuges in Verbindung steht. Durch eine derartige Kombination eines Vorsteuerventils mit einem pneumatischen Schaltventil kann mit einer kleinen elektrischen Leistung ein pneumatisches Signal erzeugt werden, welches durch das pneumatische Schaltventil anschließend umgesetzt wird, indem dieses nach Maßgabe dieses pneumatischen Signals geschaltet wird.

Erfindungsgemäß ist eine zentrale Baueinheit vorgesehen, die sowohl die elektrische Steuereinheit als auch das elektrisch steuerbare Vorsteuerventil beinhaltet. Der Erfindung liegt die Erkenntnis zugrunde, dass sowohl die elektrische Steuereinheit als auch das Vorsteuerventil elektrische Komponenten beinhalten, die räumlich benachbart in einer Baueinheit angeordnet werden können, unter Umständen von denselben Herstellern hergestellt werden und für welche unter Umständen gleiche Anforderungen, beispielsweise hinsichtlich einer Abdichtung, einem Schutz vor mechanischen Beeinträchtigungen oder einer elektromagnetischen Verträglichkeit, gelten. Andererseits muss sowohl die elektrische Steuereinheit als auch das Vorsteuerventil nicht für große pneumatische Durchflussmengen ausgelegt sein.

Weiterhin ist entsprechend der vorliegenden Erfindung eine zusätzliche Baueinheit vorgesehen, die das pneumatische Schaltventil beinhaltet. Diese zusätzliche Baueinheit kann damit von demselben Hersteller wie die zentrale Baueinheit oder aber von einem anderen Hersteller, beispielsweise einem auf pneumatische Schaltventile spezialisierten Hersteller, hergestellt werden. Die zusätzliche Baueinheit kann hierbei besonders an die pneumatischen Anforderungen angepasst werden, welche u. U. anders sind als die an die zentrale Baueinheit zu stellenden Anforderungen.

Eine Ausbildung der vorgenannten Bestandteile der erfindungsgemäßen Steuervorrichtung mit den beiden Baueinheiten ermöglicht darüber hinaus unter Umständen eine Kombination einer zentralen Baueinheit mit unterschiedlichen zusätzlichen Baueinheiten, beispielsweise für unterschiedliche Fahrzeugtypen, oder aber eine Herstellung und Verwendung einer zusätzlichen Baueinheit in einer gemeinsamen Bauform für unterschiedliche zentrale Baueinheiten.

Weiterhin ist entsprechend der Erfindung die zusätzliche Baueinheit an der zentralen Baueinheit befestigt, so dass diese zusammen eine feste Montageeinheit bilden, welche unter Optimierung der Bauraumbedingungen ausgebildet sein kann.

Die zentrale Baueinheit und die zusätzliche Baueinheit sind über innen liegende pneumatische Leitungen miteinander verbunden. Beispielsweise können diese Leitungen von Gehäusekanälen der Baueinheiten gebildet sein, so dass zusätzliche Leitungen gänzlich entfallen können. Ein Schutz der pneumatischen Leitungen kann erfindungsgemäß durch die Baueinheiten oder ein Gehäuse der Baueinheiten erfolgen, welche damit neben einer Aufnahme und Abstützung der Ventile und der Steuereinheiten multifunktional auch einem Schutz der Leitungen dienen. Gleichermaßen können durch die erfindungsgemäße Ausgestaltung zusätzliche Verbindungselemente für pneumatische Leitungen entfallen, wenn eine Herstellung einer Verbindung von Kanälen einer Baueinheit mit solchen einer anderen Baueinheit unmittelbar bei einer Befestigung der Baueinheiten aneinander hergestellt wird. Hierbei besitzen die zentrale Baueinheit und die zusätzlichen Baueinheiten in einander zugewandten Stirnflächen geeignete Schnittstellen, durch welche das Druckmittel unter Abdichtung, beispielsweise unter Verwendung geeigneter elastischer Dichtelemente übertreten kann.

Erfindungsgemäß sind somit die zentrale Baueinheit und die zusätzliche Baueinheit entsprechend der Funktionen, der technischen Gestaltung und Anforderungen und/oder der Hersteller voneinander getrennt, wobei elektrische Bauelemente vorrangig der zentralen Baueinheit zugeordnet sind, während mechanische oder pneumatische Elemente vorrangig der zusätzlichen Baueinheit zugeordnet sind. Hierdurch soll allerdings nicht ausgeschlossen sein, dass auch die zentrale Baueinheit ein pneumatisches Schaltventil aufweist oder die zusätzliche Baueinheit eine elektrische Steuervorrichtung oder elektrische Schaltelemente aufweist.

Als weiterer Vorteil der erfindungsgemäßen Ausgestaltung ergibt sich, dass bei einem pneumatischen Defekt, unter Umständen abweichend zur DE 102 45 815 A1, nicht ein Modul einschließlich der Steuervorrichtung ausgetauscht werden muss, sondern vielmehr nur die Baueinheit mit dem pneumatischen Schaltventil ausgewechselt werden muss, während die zentrale Baueinheit mit den elektrischen Komponenten weiterverwendet werden kann. Hierdurch können sich Kostenvorteile ergeben. Unter Umständen kann eine Neuherstellung von elektrischen Verbindungen von benachbarten Bauteilen mit der Steuervorrichtung, unter Umständen mit einer notwendigen neuen Initialisierung der Steuervorrichtung, vermieden werden.

Entsprechend einer Weiterbildung der vorliegenden Erfindung steht die Steuereinheit mit einem Sensor in Signalverbindung, der ein Drucksignal, beispielsweise einen Vorratsdruck oder einen einem Federbalg zugeordneten Druck, und/oder ein Wegsignal, wie beispielsweise eine Einfederung einer Fahrzeugachse, erfasst. Das Drucksignal kann hierbei zur Ermittlung einer Last des Kraftfahrzeuges von der Steuereinheit verwendet werden. Alternativ oder zusätzlich kann ein Drucksignal von einer Liftachse verwendet werden, welches hinsichtlich eines Maximalwertes überprüft wird und bei Unterschreiten zu einem Anheben der Liftachse führt und bei Überschreiten zu einem Absenken der Liftachse führt. Ebenfalls ist es denkbar, dass bei Verwendung einer Antriebsachse und einer Zusatzachse über ein geeignetes Drucksignal eine geeignete Verteilung und Zuordnung der Drücke zu Federbälgen der Antriebsachse und der Zusatzachse erfolgt. Nach Maßgabe des Drucksignals steuert die Steuervorrichtung die Bauteile und Schaltelemente der erfindungsgemäßen Steuervorrichtung an.

Der Sensor kann entsprechend einer ersten Möglichkeit der Erfindung in der zentralen Baueinheit angeordnet sein. Bei dem Sensor handelt es sich beispielsweise um ein elektrisches Bauteil, welches damit funktional und hinsichtlich der Herstellungsverfahren sowie der Anforderungen zu der zentralen Baueinheit passt. Weiterhin können etwaige elektrische Übertragungswege des Ausgangssignals des Sensors zu der Steuereinheit besonders kurz ausgebildet werden. In einem derartigen Fall muss dem Sensor die zu erfassende Größe, beispielsweise der Druck oder der Weg, zu der zentralen Baueinheit zugeführt werden, beispielsweise über geeignete Leitungen oder Kanäle. Vorzugsweise erfasst der Sensor einen Druck einer ohnehin in der zentralen Baueinheit verlaufenden Leitung.

Alternativ kann der Sensor in der zusätzlichen Baueinheit vorgesehen sein. Gemäß einer weiteren Ausgestaltung der Erfindung kann der Sensor dezentral angeordnet sein. In diesem Fall wird der Sensor vorzugsweise in der Nähe der zu erfassenden Messgröße angeordnet, beispielsweise im Bereich des Federbalges oder einer Achse o. ä. Das Messsignal des Sensors wird dann der zentralen Baueinheit zugeführt.

Entsprechend einer Weiterbildung der erfindungsgemäßen Steuervorrichtung ist neben der zentralen Baueinheit und der zusätzlichen Baueinheit eine weitere Baueinheit vorgesehen. Die weitere Baueinheit ist unmittelbar oder über die zusätzliche Baueinheit an der zentralen Baueinheit befestigt. Die weitere Baueinheit weist pneumatische Schaltventile auf und ist über pneumatische Verbindungen oder Leitungen mit der Steuereinheit verbunden. Hierdurch ist ein Aufbau der Steuervorrichtung mit mehreren Komponenten, nämlich der zentralen Baueinheit, der zusätzlichen Baueinheit und mindestens einer weiteren Baueinheit möglich, für die sich dennoch eine kompakte Ausbildung ergibt. Es ist von besonderem Vorteil, wenn jeweils eine der genannten Baueinheiten einer Funktionalität oder einer Baugruppe des Kraftfahrzeuges zugeordnet ist und eine Auswahl der Baueinheit dann erfolgt, wenn diese Funktionalität oder Baugruppe gefordert ist, beispielsweise entsprechend dem Typ des Fahrzeuges oder weiteren Anforderungen. Hierdurch können gleiche Baueinheiten für unterschiedliche Einsatzzwecke verwendet werden, die dann je nach Einsatzzweck mit weiteren Baueinheiten kombiniert werden können, wodurch sich u. U. die Bauteilvielfalt verringert bei gleichzeitiger Erhöhung der Produktvielfalt.

Eine (weitere) Verringerung der Zahl der notwendigen Bauelemente kann dadurch erzielt werden, dass die zusätzliche Baueinheit ein Schaltventil aufweist, über welches eine Be- und Entlüftungsverbindung sowohl der zusätzlichen Baueinheit als auch der weiteren Baueinheit herstellbar ist. Ein derartiges Schaltventil ist damit multifunktional ausgebildet, da über dieses die Schaltzustände von zwei Baueinheiten bzw. ein Druckzustand in beiden Baueinheiten beeinflusst werden kann. Dies ist insbesondere dann von Vorteil, wenn Ausgangsdrücke der beiden Baueinheiten miteinander gekoppelt sein sollen, da eine derartige Kopplung über das gemeinsame Schaltventil erfolgen kann.

Entsprechend einer alternativen Ausgestaltung weist die zusätzliche Baueinheit ein Schaltventil auf, über welches eine Be- und Entlüftungsverbindung der zusätzlichen Baueinheit, insbesondere eine Be- und Entlüftungsverbindung eines zugeordneten Federbalges der Luftfederungsanlage, herstellbar ist. Weiterhin weist auch die weitere Baueinheit ein Schaltelement auf, über welches eine Be- und Entlüftungsverbindung der weiteren Baueinheit, insbesondere eines anderen Federbalges der Luftfederungsanlage, herstellbar ist. Hierdurch ist ermöglicht, dass die beiden Baueinheiten unabhängig voneinander be- und entlüftet werden können. Hierdurch können die Druckzustände von unterschiedlichen den Baueinheiten zugeordneten Fahrzeugachsen oder aber von Federbälgen, welche unterschiedlichen Seiten des Fahrzeuges zugeordnet sind, separat angesteuert werden.

Entsprechend einer besonderen Ausgestaltung der erfindungsgemäßen Steuervorrichtung sind die zentrale Baueinheit, die zusätzliche Baueinheit und/oder die weitere Baueinheit jeweils einer Achse des Kraftfahrzeuges zugeordnet, beispielsweise einer Vorderachse, einer Hinterachse, einer Antriebsachse, einer Zusatzachse und/oder einer Liftachse. Durch die erfindungsgemäße Ausgestaltung kann eine Wartung des Kraftfahrzeuges vereinfacht werden, da bei Mängeln oder Defekten der Luftfederungsanlage im Bereich einer Achse lediglich eine definierte Baueinheit inspiziert und ggf. ausgetauscht werden muss. Weiterhin ist durch die erfindungsgemäße Ausgestaltung unter Umständen eine Art Modulbauweise geschaffen, in welcher eine oder mehrere gleich gestaltete Baueinheiten beispielsweise für
- eine Hinterachse und eine Liftachse,
- eine Vorderachse und eine Hinterachse und
- eine Vorderachse, eine Hinterachse und eine Liftachse,
   ggf. unter Ergänzung mit zusätzlichen Bauelementen oder Baueinheiten, in unterschiedlichen Fahrzeugen verwendet werden können.

Gemäß einer weiteren Ausgestaltung der erfindungsgemäßen Steuervorrichtung weisen die zusätzliche und die weitere Baueinheit jeweils zwei Sperrventile auf. Jedes Sperrventil ist hierbei mit einem Federbalg einer Seite einer Fahrzeugachse verbunden, so dass über das Sperrventil die Be- und Entlüftung des Federbalges gesteuert werden kann. Hierdurch kann gezielt eine Neigung des Kraftfahrzeuges um eine Längs- oder Querachse desselben beeinflusst werden bzw. einer unerwünschten Neigung vorgebeugt werden. Als weiterer möglicher Vorteil ergibt sich, dass bei einem Druckverlust im Bereich eines Federbalges durch geeignete Schaltstellungen des dem Federbalg zugeordneten Sperrventils der die Leckage aufweisende Federbalg gezielt mit zusätzlicher Druckluft beaufschlagt werden kann.

Für den Fall, dass eine Kopplung einer Einfederung von Rädern einer Fahrzeugachse gewünscht ist, schlägt die Erfindung gemäß einer weiteren Ausgestaltung vor, dass die beiden Sperrventile der zusätzlichen Baueinheit und/oder der Baueinheit zwei jeweils einer Fahrzeugseite zugeordnete Ausgänge aufweisen. Die Ausgänge sind in diesem Fall über eine Drossel miteinander verbunden. Über die Drosselcharakteristik kann die Kopplung der Einfederung und der Druckverhältnisse auf beiden Fahrzeugseiten beeinflusst werden. Die die Fahrzeugseiten verbindende Drossel kann hierbei ständig wirksam sein. Entsprechend einer alternativen Ausgestaltung kann die Drossel mit einem sperrbaren Drosselventil ausgebildet sein, so dass die Drossel nur in ausgewählten Betriebszuständen des Kraftfahrzeugs wirksam wird. Hierbei ist es ebenfalls möglich, dass das Drosselventil in ein ohnehin vorhandenes Ventil, beispielsweise eines der vorgenannten Ventile, integriert ist. Ein Sperren des Drosselventils erfolgt hierbei beispielsweise während einer Kurvenfahrt oder unter Umständen bei unebener Fahrbahn.

Vorzugsweise weist eine Baueinheit ein 3/3-Wegeventil auf. Dieses 3/3-Wegeventil verbindet in einer ersten Schaltstellung die Federbälge einer Fahrzeugachse mit den Federbälgen einer anderen Fahrzeugachse, so dass durch Herbeiführung der ersten Schaltstellung gezielt eine Kopplung der Fahrzeugachsen herbeigeführt werden kann. Dies ist insbesondere bei einer großen Beladung des Fahrzeuges der Fall oder wenn eine Liftachse abgesenkt ist. In einer zweiten Schaltstellung sperrt das 3/3-Wegeventil die Federbälge der der Baueinheit zugeordneten Federachse, so dass ein stabiler Federungszustand gewährleistet ist. In einer dritten Schaltstellung entlüftet das 3/3-Wegeventil die Federbälge der der Baueinheit zugeordneten Fahrzeugachse. Dieses ist insbesondere im Zusammenhang mit einer hieran anschließenden oder hiermit einhergehenden Beaufschlagung eines Liftbalges von Interesse.

Gemäß einer bevorzugten Ausgestaltung der erfindungsgemäßen Steuervorrichtung erfolgt eine Entlüftung in der vorgenannten dritten Schaltstellung über ein Restdruckventil. Hierdurch kann ein vollständiges Entleeren des Federbalges in der dritten Schaltstellung vermieden werden, da ein Rest- oder Mindestdruck gewährleistet wird. Hierdurch können Beschädigungen des Federbalges durch ein Einklemmen oder andere mechanische Beeinträchtigungen vermieden werden.

Nach einem weiteren Vorschlag der Erfindung können mehrere (zentrale) Baueinheiten vorgesehen sein, welche jeweils über eine Steuereinheit verfügen und miteinander kommunizieren. Als Signale zwischen diesen Steuereinheiten werden beispielsweise Schaltsignale oder Signale hinsichtlich der Betriebsstellung von Schaltelementen, Drücke wie von einem Sensor erfasste Druck- oder Wegsignale oder Fehlerzustände verwendet.

In dem Fall, dass die Steuereinheit mit einem regelbaren Dämpfungselement in Signalverbindung steht, kann ein Fahrzeug mit besonders vorteilhaften Fahreigenschaften bereitgestellt werden, indem die Steuereinheit gleichermaßen auf die Federungseigenschaften durch eine geeignete Beaufschlagung der Federbälge sowie auf die Dämpfungseigenschaften durch eine Veränderung des Dämpfungselementes einwirkt. Hierbei kann es sich beispielsweise um einen hydraulischen Dämpfer handeln, bei welchem eine Drosselwirkung nach Maßgabe der Steuereinheit einstellbar ist. Eine Anpassung der Federungs- und Dämpfungseigenschaften kann beispielsweise nach Maßgabe der Geschwindigkeit des Fahrzeugs, der Fahrbahn, einem Beladungszustand, einer Kurvenfahrt, einer manuellen Vorgabe des Fahrers oder ähnlichem erfolgen.

Entsprechend einer erfindungsgemäßen Weiterbildung wird in der Steuervorrichtung eine Gesamtlast ermittelt, welche die Last an einer Antriebsachse sowie einer weiteren Fahrzeugachse beinhaltet. Hierbei ist es unter Umständen wünschenswert, dass an der Antriebsachse zur Übertragung der Antriebsbewegung ein maximal zulässiger Druck in den Federbälgen und damit eine maximale Anpresskraft an der Fahrbahn gegeben ist. Demgemäß schlägt die Erfindung vor, dass durch die Steuervorrichtung der Druck der Federbälge an der Antriebsachse auf den maximal zulässigen Druck eingestellt wird. Aus diesem Druck kann die Teillast ermittelt werden, welche über die Antriebsachse übertragen wird. Aus der verbleibenden notwendigerweise zu übertragenden Restlast wird unter Berücksichtigung der Charakteristik des zugeordneten Federbalges ein verbleibender Restdruck ermittelt, der durch die Steuervorrichtung an den Federbälgen der weiteren Fahrzeugachse eingestellt wird. Die zulässige Last an der Antriebsachse und die verbleibende Restlast werden dabei derart eingestellt, dass sich aus der Summe die notwendige Gesamtlast ergibt. Hierdurch kann eine optimale Ausnutzung der Traktion an der Antriebsachse erzielt werden.

Weitere Ausgestaltungen der Erfindung ergeben sich aus den Unteransprüchen, der Beschreibung und den Zeichnungen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erfindungsgemäße Steuervorrichtung in einkreisiger Ausgestaltung mit Vorderachsventil.
- **Fig. 2**: zeigt eine erfindungsgemäße Steuervorrichtung in zweikreisiger Ausgestaltung mit Hinterachsventil.
- **Fig. 3**: zeigt eine erfindungsgemäße Steuervorrichtung in dreikreisiger Ausgestaltung mit Komplettventil.
- **Fig. 4**: zeigt eine erfindungsgemäße Steuervorrichtung in einer weiteren dreikreisigen Ausgestaltung mit Komplettventil.
- **Fig. 5**: zeigt eine erfindungsgemäße Steuervorrichtung in vierkreisiger Ausgestaltung mit Komplettventil.
- **Fig. 6**: zeigt eine erfindungsgemäße Steuervorrichtung in vierkreisiger Ausgestaltung mit Hinterachsventil.
- **Fig. 7**: zeigt eine erfindungsgemäße Steuervorrichtung in zweikreisiger Ausgestaltung mit Hinterachsventil.
- **Fig. 8**: zeigt eine erfindungsgemäße Steuervorrichtung in einer weiteren zweikreisigen Ausgestaltung mit Hinterachsventil.
- **Fig. 9**: zeigt eine erfindungsgemäße Steuervorrichtung in sechskreisiger Ausgestaltung für eine Vollluftfederung.
- **Fig. 10**: zeigt eine erfindungsgemäße Steuervorrichtung in dreikreisiger Ausgestaltung für eine Vollluftfederung.

### FIGURENBESCHREIBUNG

In den folgenden Figuren sind gleich wirkende oder entsprechende Bauelemente in unterschiedlichen Ausgestaltungen der Erfindung mit gleichen Bezugszeichen versehen.

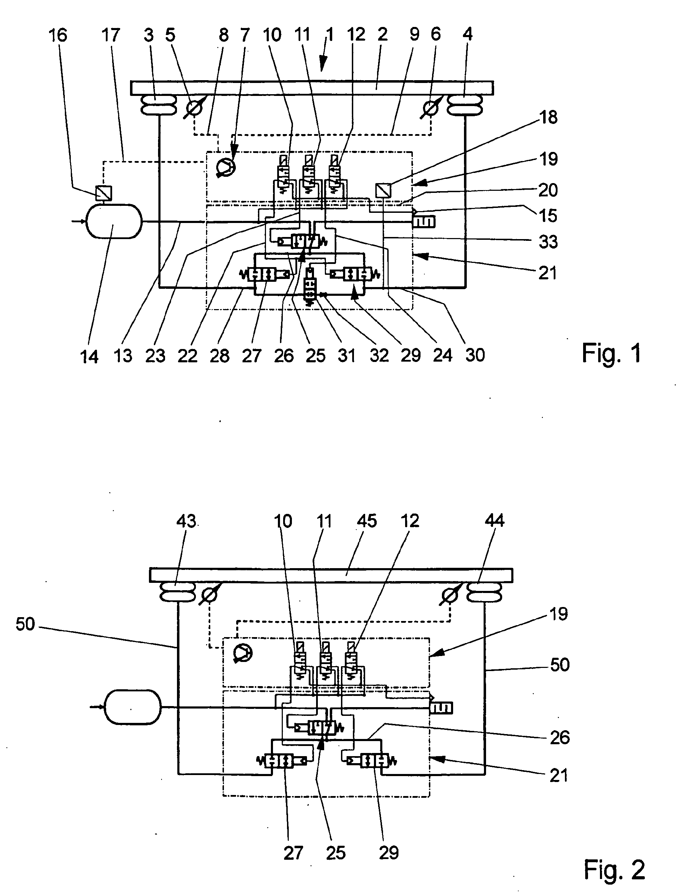

**Fig. 1** zeigt eine erfindungsgemäße Steuervorrichtung 1, die einer Luftfederungsanlage für eine Vorderachse 2 zugeordnet ist. Die Vorderachse 2 ist auf einem auf der linken Seite eines Nutzfahrzeugs angeordneten Federbalg 3 (oder mehreren Federbälgen) sowie auf einem auf der rechten Seite des Nutzfahrzeugs angeordneten Federbalg 4 (oder mehreren Federbälgen) abgestützt. Ein Wegsensor 5 (6) erfasst eine Einfederung der Vorderachse 2 auf der linken (rechten) Seite des Nutzfahrzeugs.

Einer Steuereinheit 7 werden über Signalverbindungen 8, 9 Messsignale der Wegsensoren 5, 6 zugeführt. Die Steuereinheit 7 besitzt Vorsteuerventile 10, 11, 12, die im vorliegenden Fall als 3/2-Wegeventile ausgebildet sind. Ein Anschluss der Vorsteuerventile 10, 11, 12 ist jeweils über eine von einer zentralen Vorratsleitung 13 abzweigenden individuellen Leitung mit einem Vorratsbehälter 14 verbunden. Der Vorratsbehälter wird in nicht dargestellter Weise von einem Kompressor mit einem geeigneten Vorratsdruck beaufschlagt. Ein weiterer Anschluss der Vorsteuerventile 10, 11, 12 ist mit einer Entlüftung 15 verbunden, welche vorzugsweise einen Schalldämpfer aufweist. Der dritte Anschluss der Vorsteuerventile 10, 11, 12 ist jeweils mit einem von dem Vorsteuerventil mit einem Steuerdruck anzusteuernden pneumatischen Bauelement verbunden. Die Vorsteuerventile 10, 11, 12 werden von der Steuereinheit 7 geeignet elektrisch beaufschlagt.

Hierfür verfügt die Steuereinheit 7 über geeignete Regelungsstrategien, Kennfelder, Algorithmen, Software und ähnliches, welche in geeigneter Hardware wie eine CPU und/oder Speicherelementen abgelegt sind. In der in Fig. 1 skizzierten ersten Schaltstellung verbinden die Vorsteuerventile 10, 11, 12 die angesteuerten Bauelemente mit der Entlüftung 15, während in der zweiten Schaltstellung eine Verbindung der angesteuerten Bauelemente mit dem Vorratsbehälter 14 gegeben ist. Der Steuereinheit 7 wird weiterhin ein Drucksignal eines Drucksensors 16 über eine Signalverbindung 17 zugeführt, welcher den Druck im Vorratsbehälter 14 (oder in einer mit dem Vorratsbehälter in Druckverbindung stehenden Leitung) erfasst.

Gemäß Fig. 1 sind die Steuereinheit 7 und die Vorsteuerventile 10, 11, 12 sowie ein weiterer Drucksensor 18 in einer zentralen Baueinheit 19 aufgenommen. Die zentrale Baueinheit 19 ist hier mit dem gestrichelten Rechteck symbolisch dargestellt. Die zentrale Baueinheit 19 besitzt vorzugsweise ein Gehäuse, welches über geeignete Befestigungsmittel mit dem Nutzfahrzeug zu verbinden ist. Weiterhin besitzt die zentrale Baueinheit Anschlüsse für eine elektrische Leistungsversorgung, Anschlüsse für die Signalverbindungen 17, 8, 9 und ggf. Anschlüsse für eine Kommunikation mit anderen elektrischen, pneumatischen oder mechanischen Bauelementen oder Steuereinheiten, welche insbesondere im Bereich der frei zugänglichen Außenflächen vorgesehen sind. Das Gehäuse der zentralen Baueinheit ist dicht ausgebildet, um einen Eintritt beispielsweise von Feuchtigkeit oder Schmutzpartikeln zu vermeiden, sowie für eine Schutzfunktion gegenüber mechanischen Einwirkungen ausgestattet und zur Erhöhung der elektromagnetischen Verträglichkeit geeignet isoliert.

Des Weiteren besitzt die zentrale Baueinheit 19 eine Schnittstelle 20, über welche die zentrale Baueinheit mit einer zusätzlichen Baueinheit 21 verbunden werden kann. Hierbei erfolgt über die Schnittstelle 20 zunächst eine mechanische Anbindung der zusätzlichen Baueinheit 21 an der zentralen Baueinheit 19. Weiterhin erfolgt über die Schnittstelle 20 eine pneumatische Verbindung von Leitungen der zentralen Baueinheit 19, hier die Steuerleitungen der Vorsteuerventile 10, 11, 12. Hierzu sind im Bereich der Schnittstelle 20 insbesondere Dichtelemente vorgesehen, die einen dichten Übertritt des Steuermediums ermöglichen. Darüber hinaus ist es möglich, dass im Bereich der Schnittstelle 20 eine elektrische Verbindung zwischen elektrischen Leitungen der zentralen Baueinheit 19 und solchen der zusätzlichen Baueinheit 21 geschaffen wird, ggf. unter entsprechender Abdichtung. Zusätzlich zu den vorgenannten Dichtungen kann im Bereich der äußeren Begrenzungen der Schnittstelle 20 ein Dichtelement für die gesamte Schnittstelle 20 vorgesehen sein. Weiterhin können in der Schnittstelle Verzweigungsstellen vorgesehen von einer Leitung in einer Baueinheit 19, 21 zu mehreren Leitungen in der anderen Baueinheit 21, 19. Derartige Verzweigungsstellen können vereinfacht gebildet werden durch Querkanäle in der Schnittstelle, die von beiden Baueinheiten 19, 21 begrenzt werden und in welche die Leitungen münden.

Entsprechend einer besonderen erfindungsgemäßen Ausgestaltung werden die vorgenannten Verbindungen zwischen elektrischen oder pneumatischen Leitungen der zentralen Baueinheit 19 und der zusätzlichen Baueinheit 21 automatisch mit einer Befestigung der zusätzlichen Baueinheit 21 an der zentralen Baueinheit 19 hergestellt und abgedichtet, wodurch die gewählten Befestigungselemente multifunktional eingesetzt sind. Beispielsweise kann mit einem Anziehen von Befestigungsschrauben die Anpresskraft der Baueinheiten 19, 21 in der Schnittstelle erhöht werden, wodurch Dichtelemente vorgespannt werden und gleichzeitig pneumatische und/oder elektrische Verbindungen geschaffen werden.

In der zusätzlichen Baueinheit 21 sind gemäß Fig. 1 ausschließlich pneumatische Schaltventile angeordnet, welche von Steuerleitungen 22, 23, 24 der Vorsteuerventile 10, 11, 12 angesteuert werden.

Der Steuerdruck der Steuerleitung 23 des Vorsteuerventils 11 dient zur Ansteuerung eines als 3/2-Wegeventil ausgebildeten Schaltventils 25, welches für nicht anliegenden Steuerdruck entsprechend der in Fig. 1 dargestellten ersten Schaltstellung eine gemeinsame Achsleitung 26 mit der Entlüftung 15 verbindet, während für anliegenden Steuerdruck in einer zweiten Schaltstellung die gemeinsame Achsleitung 26 über die Vorratsleitung 13 mit dem Vorratsbehälter 14 verbunden ist.

Die Steuerleitung 22 ist mit dem als 2/2-Wegeventil ausgebildeten Schaltventil 27 verbunden, welches ohne anliegenden Steuerdruck in der in Fig. 1 dargestellten ersten Schaltstellung eine linke Ausgangsleitung 28 sperrt, während für anliegenden Steuerdruck die linke Ausgangsleitung mit der gemeinsamen Achsleitung 26 verbunden ist. In gleicher Weise ist die Steuerleitung 22 mit einem weiteren, der rechten Fahrzeugseite zugeordneten Schaltventil 29 zugeordnet, welches als Sperrventil für die Verbindung der Achsleitung 26 mit einer rechten Ausgangsleitung 30 dient. Die linke (rechte) Ausgangsleitung 28 (30) ist mit dem linken Federbalg 3 (rechten Federbalg 4) verbunden.

Eine Kopplung der linken Ausgangsleitung 28 mit der rechten Ausgangsleitung 30 erfolgt über ein weiteres Schaltventil 31, das von der Steuerleitung 24 angesteuert wird und in der dargestellten ersten Schaltstellung ohne anliegenden Steuerdruck die Ausgangsleitungen 28, 30 miteinander verbindet sowie in der zweiten Schaltstellung mit anliegendem Steuerdruck die Verbindung der Ausgangsleitungen 28, 30 sperrt. In dem Schaltventil 31 oder der zugeordneten Leitung kann eine Drossel 32 vorgesehen sein.

Von der rechten Ausgangsleitung 30 zweigt eine Druckleitung 33 ab, die über die Schnittstelle 20 in der zuvor angeführten Weise mit einer korrespondierenden Leitung der zentralen Baueinheit 19 gekoppelt ist, die wiederum mit dem Drucksensor 18 verbunden ist.

Das Schaltventil 25 dient einer gemeinsamen Be- und Entlüftung für beide Federbälge 3, 4, sofern die Schaltventile 27, 29 in Öffnungsstellung sind. Über die Schaltventile 27, 29 kann zusätzlich selektiv die Be- und Entlüftung der Federbälge 3, 4 für jeweils eine Fahrzeugseite gesteuert werden. Das dargestellte Ausführungsbeispiel stellt eine einkreisige Ausgestaltung mit einer sperrbaren Querdrossel dar. Weiterhin erfolgt eine Drucksensierung zumindest hinsichtlich der Druckverhältnisse in einem Federbalg 4, welche Aufschluss über die ordnungsgemäße Funktion der Steuervorrichtung oder des Federbalges 4 gibt und beispielsweise Informationen über einen Beladungszustand des Nutzfahrzeugs liefert. Alternativ oder zusätzlich kann das gewonnene Drucksignal auch dynamisch ausgewertet werden, wodurch sich Informationen über das Fahrverhalten des Nutzfahrzeugs ergeben.

Für die in **Fig. 2** dargestellte Ausführungsform der erfindungsgemäßen Steuervorrichtung 1 sind die Federbälge 3, 4 einer Hinterachse 45 zugeordnet. Bei ansonsten Fig. 1 entsprechender Ausgestaltung der zentralen Baueinheit 19 sowie der zusätzlichen Baueinheit 21 und der Verbindung der Baueinheiten 19, 21 miteinander und mit angeschlossenen Bauelementen besitzt die zentrale Baueinheit 19 keinen Drucksensor, so dass die Druckleitung 33 entfallen kann sowie die geeigneten Verbindungen über die Schnittstelle 20. In diesem Fall ist es möglich, dass die zusätzliche Baueinheit 21 und/oder die zentrale Baueinheit 19 identisch zu den in Fig. 1 dargestellten Einheiten 19, 21 ausgebildet ist, wobei der Platz für den Drucksensor 18 nicht mit einem solchen gefüllt ist und überflüssige Leitungen, wie die Druckleitung 33, durch geeignete Verschlusselemente in einer Baueinheit 21, 19 oder aber ein geeignetes Verschlusselement im Bereich der Schnittstelle 20 geschlossen ist. Gemäß einer besonderen Ausgestaltung der Erfindung ist im Bereich der Schnittstelle 20 eine Adapterplatte vorgesehen, welche für unterschiedliche Ausgestaltungen der Steuervorrichtung unterschiedlich ausgebildet ist und beispielsweise für das in Fig. 2 dargestellte Ausführungsbeispiel die Druckleitung 33 dicht verschließt, während in Fig. 1 eine abweichende Adapterplatte mit einer Gewährleistung einer Verbindung der Druckleitung 33 mit dem Drucksensor 18 eingesetzt wird. Weiterhin ist es möglich, dass in eine Baueinheit 19, 21 ein Modul eingesetzt wird, welches beispielsweise die Steuereinheit und/oder Gruppen von Schaltventilen beinhaltet, die individuell an Anforderungen oder Fahrzeugtypen angepasst sein können

Darüber hinaus ist gemäß Fig. 2 der Drucksensor 16 mit der Signalverbindung 17 zu der Steuereinheit 7 entfallen. Ebenfalls das Schaltventil 31 mit der Drossel 32 und zugeordneten Verbindungsleitungen zwischen den Ausgangsleitungen 28, 30 sind entfallen.

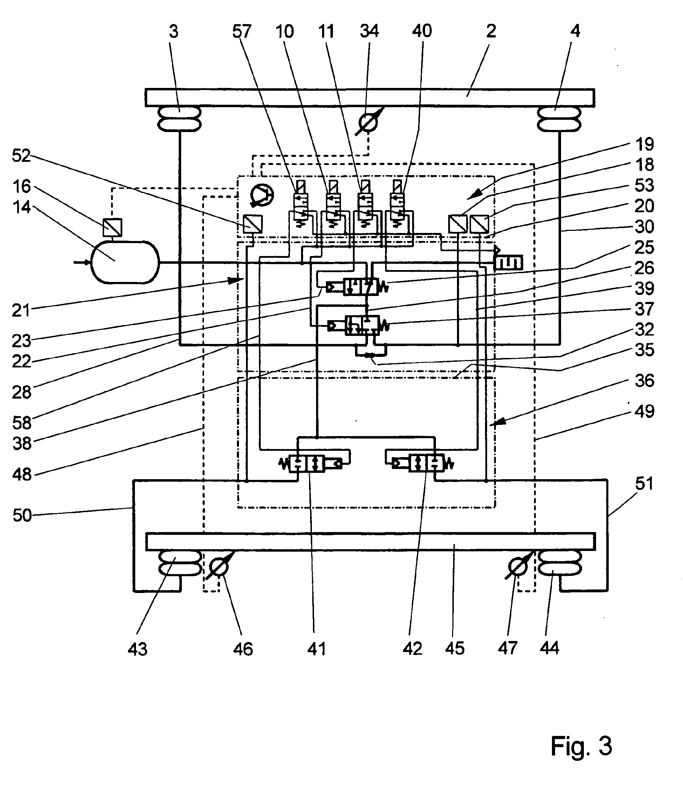

Für das in **Fig. 3** dargestellte Ausführungsbeispiel der erfindungsgemäßen Steuervorrichtung 1 entspricht die zentrale Baueinheit 19 und die zusätzliche Baueinheit 21 hinsichtlich der Bauelemente und der Wirkverbindungen im Wesentlichen dem in Fig. 1 dargestellten Ausführungsbeispiel, wobei der Steuervorrichtung nicht separate Sensorsignale von Wegsensoren 5, 6 für beide Fahrzeugseiten zugeführt werden, sondern vielmehr lediglich ein Sensorsignal eines zentralen Wegsensors 34.

Weiterhin ist gemäß Fig. 3 über eine Schnittstelle 35 eine weitere Baueinheit 36 an die zentrale Baueinheit 19 angebunden. Eine derartige Anbindung kann gemäß Fig. 3 über die zusätzliche Baueinheit 21 erfolgen, so dass die Schnittstelle 35 zwischen zusätzlicher Baueinheit 21 und weiterer Baueinheit 36 angeordnet ist, oder aber unmittelbar an der zentralen Baueinheit 19 erfolgen, wobei die Schnittstelle 35 in diesem Fall zwischen der zentralen Baueinheit 19 und der weiteren Baueinheit 36 gebildet ist.

In der zusätzlichen Baueinheit 21 gemäß Fig. 3 verzweigt die gemeinsame Achsleitung 26 nicht entsprechend Fig. 1 auf die Schaltventile 27, 29, sondern vielmehr zu einem Schaltventil 37, welches über Steuerleitung 22 angesteuert ist. In der skizzierten drucklosen ersten Schaltstellung des Schaltventils 37 ist die Verbindung der Federbälge 3, 4 mit der Achsleitung 26 gesperrt, während in der druckbeaufschlagten zweiten Schaltstellung die Ausgangsleitungen 28, 30 mit der Achsleitung 26 verbunden sind. Weiterhin sind die Ausgangsleitungen 28, 30 ständig über die Drossel 32 miteinander verbunden.

Von der Achsleitung 26 zweigt eine Hinterachsleitung 38 ab.

In dem in Fig. 3 dargestellten Ausführungsbeispiel weist die zentrale Baueinheit 19 Vorsteuerventile 40, 57 mit zugeordneten Steuerleitungen 39, 58 auf. Die Steuerleitung 58 des Vorsteuerventils 57 sowie die Steuerleitung 39 des Vorsteuerventils 40 werden an der Schnittstelle 20 von der zentralen Baueinheit 19 an die zusätzliche Baueinheit 21 übergeben. In der zusätzlichen Baueinheit 19 sind die vorgenannten Steuerleitungen lediglich hindurchgeführt ohne entscheidende pneumatische Bauelemente wie Schaltelemente, Drosseln o. ä., und werden an der Schnittstelle 35 an die weitere Baueinheit 36 übergeben. Weiterhin ist die Hinterachsleitung 38 ebenfalls über die Schnittstelle 35 mit einem entsprechenden Leitungsteil in der weiteren Baueinheit 36 verbunden. Die Steuerleitungen 39, 58 dienen als Steuerdrücke für Schaltventile 41, 42 der weiteren Baueinheit 36. Das Schaltventil 41 (Schaltventil 42) sperrt in der dargestellten, nicht von einem Steuerdruck beaufschlagten Stellung eine Verbindung der Hinterachsleitung 38 mit einem Federbalg 43 (Federbalg 44), welcher der linken Fahrzeugseite (rechten Fahrzeugseite) zugeordnet ist, während in einer zweiten, mit dem Steuerdruck beaufschlagten Schaltstellung eine Belüftungsverbindung zwischen der Hinterachsleitung 38 und dem Federbalg 43 (Federbalg 44) geschaffen ist. Die Federbälge 43, 44 sind einer Hinterachse 45 zugeordnet. Ein Wegsensor 46 (Wegsensor 47) erfasst die Verschiebung der linken (rechten) Seite der Hinterachse 45. Die Wegsensoren 46, 47 stehen über Signalverbindungen 48, 49 in Verbindung mit der zentralen Baueinheit 19 bzw. der Steuereinheit 7. Abweichend zu den dargestellten Ausführungsformen können Signalverbindungen 48, 49 nicht außerhalb der Baueinheiten 36, 21, 19 verlaufen, was zusätzliche Anschlüsse erfordert, sondern innerhalb derselben verlaufen und über die Schnittstellen 20, 35 miteinander verbunden sein. In dem in Fig. 3 dargestellten Ausführungsbeispiel stellt das Schaltventil 25 ein zentrales Schaltventil dar, mittels dessen eine Steuerung der Be- und Entlüftung für alle Kreise erfolgen kann.

Gemäß Fig. 3 erfolgt eine Erfassung eines Druckes in einer hinteren linken Ausgangsleitung 50 sowie einer hinteren rechten Ausgangsleitung 51, indem von diesen Ausgangsleitungen ein Leitungszweig abzweigt und durch die weitere Baueinheit, Schnittstelle 35, die zusätzliche Baueinheit 21 und Schnittstelle 20 in die zentrale Baueinheit 19 geführt wird und so der Druck den Drucksensoren 52, 53 der zentralen Baueinheit 19 zugeführt wird.

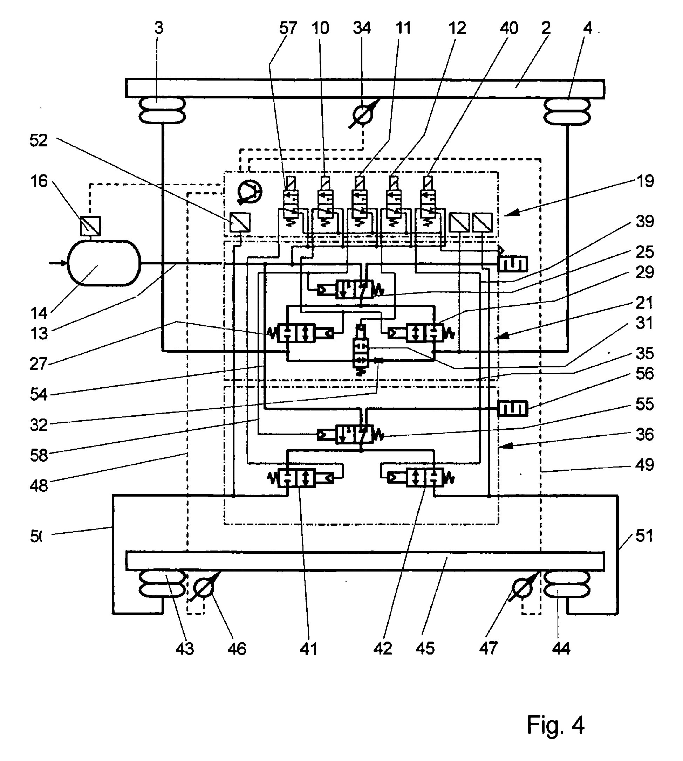

Für das in **Fig. 4** dargestellte Ausführungsbeispiel verzweigt abweichend zur Fig. 3 die Vorratsleitung 13 derart, dass ein Leitungszweig entsprechend Fig. 3 mit dem Schaltventil 25 gekoppelt ist, während ein anderer Leitungszweig 54 über die Schnittstelle 35 mit der weiteren Baueinheit 36 kommuniziert, nämlich mit einem zentralen Schaltventil 55 verbunden ist, welches als 3/2-Wegeventil ausgebildet ist. Über das Schaltventil 55 können zentral beide Schaltelemente 41, 42 der weiteren Baueinheit beaufschlagt werden, die entsprechend Fig. 3 mit den Federbälgen der Hinterachse 45 verbunden sind. Das Schaltventil 55 besitzt einen Entlüftungsanschluss, welcher mit der Entlüftung 15 der zusätzlichen Baueinheit oder aber gemäß Fig. 4 einer eigenen Entlüftung 56 der weiteren Baueinheit 36 verbunden sein kann. Die Ausgestaltung der zusätzlichen Baueinheit entspricht im Wesentlichen der in Fig. 1 dargestellten Ausgestaltung.

Die zentrale Baueinheit 19 entspricht in Teilen der in Fig. 1 dargestellten zentralen Baueinheit 19, wobei entsprechend Fig. 3 die Schaltventile 57, 40 mit zugeordneten Steuerleitungen 58, 39 zur individuellen Ansteuerung der Schaltventile 41, 42 sowie zusätzliche Drucksensoren 52, 53, 18 vorgesehen sind. Gemäß Fig. 4 ist eine dreikreisige Steuervorrichtung gebildet, welche eine sperrbare Querdrossel an der Vorderachse (Schaltelement 31 und Drossel 32) mit einer Drucksensierung aufweist. Sowohl der Vorderachse 2 als auch der Hinterachse 45 ist jeweils eine zentrale Schalteinheit (Schaltventile 39, 55) zugeordnet, wobei eine zusätzliche separate Ansteuerung jeder Seite der Achse über die Schaltventile 27, 29, 41, 42 möglich ist.

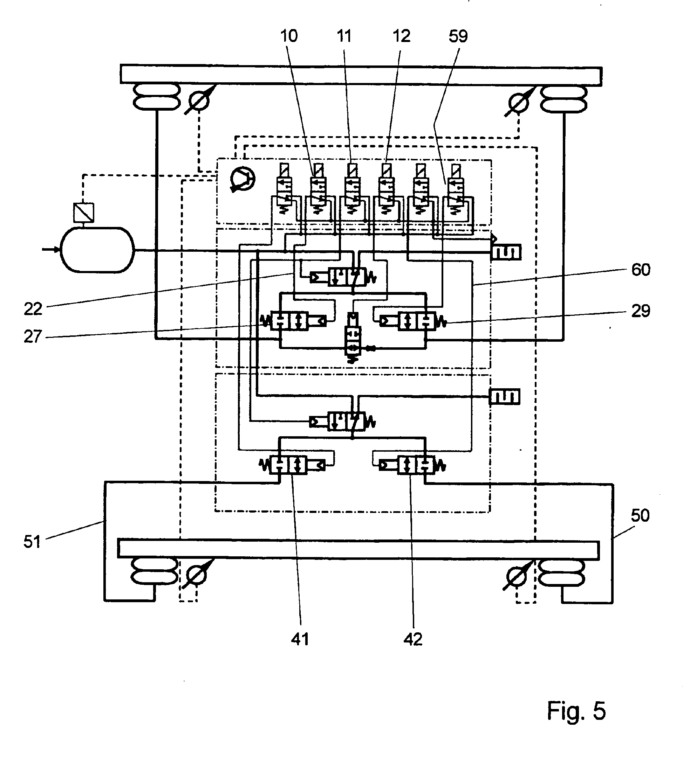

Für das in **Fig. 5** dargestellte Ausführungsbeispiel der Steuervorrichtung 1 ist abweichend zur Fig. 4 in der zentralen Baueinheit 19 ein weiteres Vorsteuerventil 59 vorgesehen, über dessen Steuerleitung 60 das Schaltventil 29 separat angesteuert werden kann, während in diesem Fall das Schaltventil 27 allein mit der Steuerleitung 22 des Vorsteuerventils 10 verbunden ist. Gemäß Fig. 5 ist damit eine separate Ansteuerung jedes einzelnen Sperrventils 27, 29, 41, 42 möglich, vgl. auch Fig. 2.

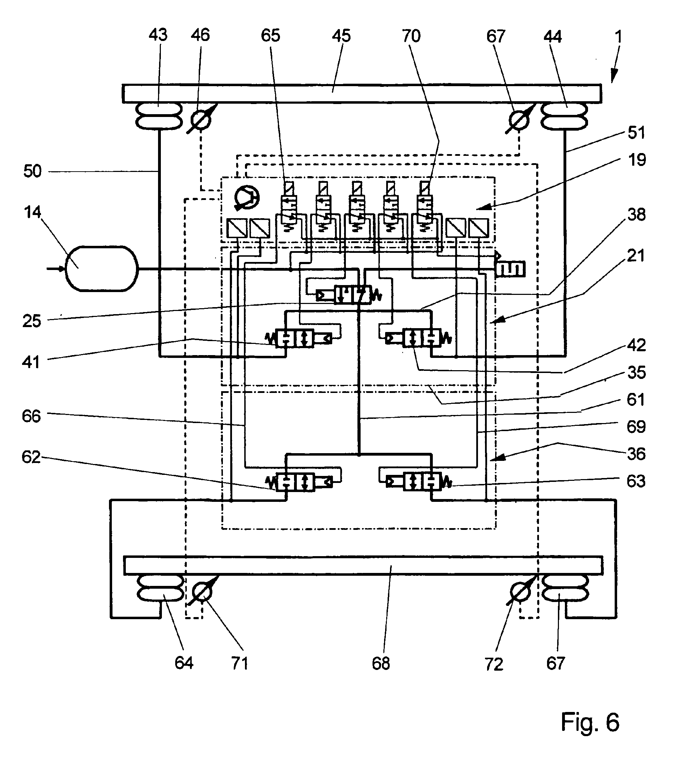

Gemäß **Fig. 6** sind die Schaltventile 41, 42 für die Hinterachse 45 in die zusätzliche Baueinheit 21 integriert und werden über die Hinterachsleitung 38 von dem Schaltventil 25 be- und entlüftet. Weiterhin zweigt von der Hinterachsleitung 38 eine Zusatzachsleitung 61 ab, welche über die Schnittstelle 35 mit der weiteren Baueinheit 36 verbunden ist und in dieser auf zwei Schaltventile 62, 63 aufzweigt. Das Schaltventil 62 ist mit einem linken Federbalg 64 verbunden und wird von einem Vorsteuerventil 65 der zentralen Baueinheit 19 über eine Steuerleitung 66 angesteuert. In entsprechender Weise ist das Schaltventil 63 mit einem rechten Federbalg 67 der Zusatzachse 68 verbunden und über eine Steuerleitung 69 von einem Vorsteuerventil 70 angesteuert. Wegsensoren 71, 72 erfassen die linke und die rechte Auslenkung der Zusatzachse 68. Das Schaltventil 25 dient als zentrales Schaltventil für die Federbälge 43, 44 der Hinterachse sowie die Federbälge 64, 67 der Zusatzachse 68.

Diesem zentralen Schaltventil 25 sind jeweils die separat ansteuerbaren Schaltventile 41, 42, 62, 63 nachgeschaltet. Damit ist eine vierkreisige Steuervorrichtung gegeben.

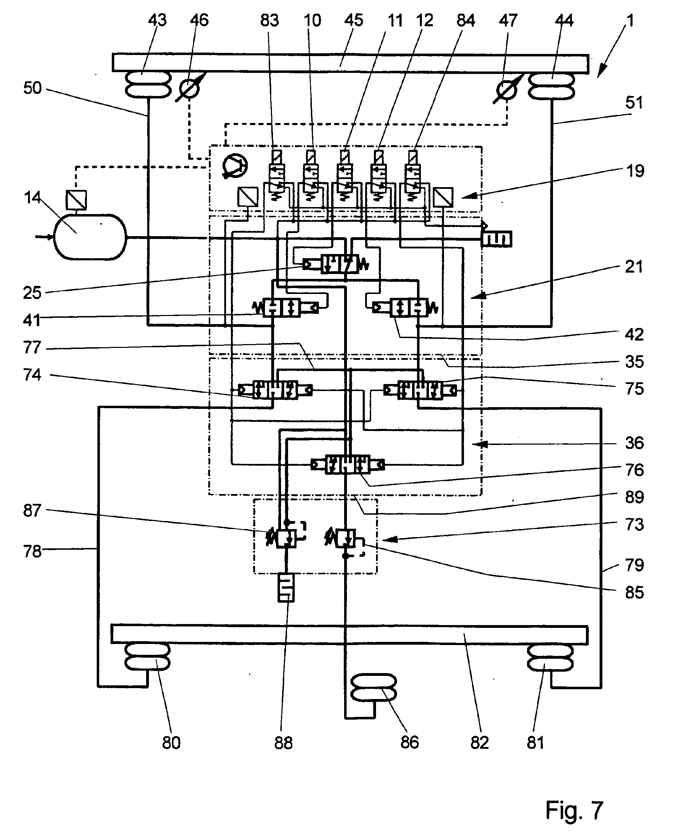

Bei der Steuervorrichtung 1 entsprechend **Fig. 7** ist zusätzlich zu den Baueinheiten 19, 21, 36 eine Baueinheit 73 vorgesehen, welche insbesondere an die weitere Baueinheit 36 angebunden ist. Über die zusätzliche Baueinheit 21 wird entsprechend Fig. 6 die Hinterachse 45 mit den Federbälgen 43, 44 unter Verwendung der Schaltventile 25, 41, 42 angesteuert. Die weitere Baueinheit 36 besitzt Schaltventile 74, 75, 76, die jeweils von zwei Steuerdrücken beaufschlagbar sind und als 3/3-Wegeventile ausgebildet sind. Die Schaltventile 74, 75 besitzen jeweils einen Anschluss, welcher über Schnittstelle 35 mit Ausgangsleitung 50 bzw. Ausgangsleitung 51 verbunden sind. Die zweiten Anschlüsse der Schaltventile 74, 75 sind über eine Querverbindung 77 miteinander verbunden. Ausgangsseitig sind die Schaltventile 74, 75 mit Ausgangsleitungen 78 und 79 verbunden, die Federbälge 80, 81 be- und entlüften, die einer Liftachse 82 zugeordnet sind. Das Schaltventil 74 wird einerseits vom Steuerdruck eines Vorsteuerventils 83 angesteuert und andererseits vom Steuerdruck eines Vorsteuerventils 84 angesteuert, wobei die Vorsteuerventile 83, 84 der zentralen Baueinheit 19 zugeordnet sind. Gleiches gilt für das Schaltventil 75.

Fig. 7 zeigt die Schaltventile 74, 75 in einer zweiten Schaltstellung, in welcher die Steuerdrücke der Vorsteuerventile 83, 84 miteinander korrelieren. Diese Schaltstellung entspricht einer Sperrstellung, in welcher die Ausgangsleitungen 78, 79 der Liftachse 82 gesperrt sind. Überwiegt der Steuerdruck des Vorsteuerventils 83, so nehmen die Schaltventile 74, 75 eine erste Schaltstellung ein, in welcher die Ausgangsleitung 50, 51 mit den Ausgangsleitungen 78, 79 verbunden ist, so dass in den Federbälgen 43, 44, 80, 81 korrelierende Druckverhältnisse herrschen. Überwiegt hingegen der Steuerdruck des Vorsteuerventils 84, nehmen die Schaltventile 74, 75 eine dritte Schaltstellung ein, in welcher eine Verbindung zwischen den Ausgangsleitungen 50, 51, 78, 79 gesperrt ist, während die Ausgangsleitungen 78, 79 über die Querverbindung 77 verbunden sind, so dass in den Federbälgen 80, 81 korrelierende Druckverhältnisse herrschen.

Weiterhin verzweigt die Querverbindung zu einem ersten Anschluss des Schaltventils 76. Ein zweiter Anschluss des Schaltventils 76 ist mit dem Vorratsbehälter 14 ohne Zwischenschaltung von Schaltelementen verbunden. Ein dritter Anschluss des Schaltventils 76 ist über ein Druckbegrenzungsventil 85 mit einem Liftbalg 86 verbunden. Sowohl der erste, mit der Querverbindung 77 verbundene Anschluss des Schaltventils 76 als auch der mit dem Vorratsbehälter 14 verbundene Anschluss des Schaltventils 76 zweigen in der weiteren Baueinheit 36 ab und stehen über ein Restdruckventil 87 in Verbindung mit der Umgebung, insbesondere unter Verwendung eines Schalldämpfers 88. Das Druckbegrenzungsventil 85, das Restdruckventil 87 und der Schalldämpfer 88 sind der weiteren Baueinheit 73 zugeordnet und über eine geeignete Schnittstelle 89 zwischen den weiteren Baueinheiten 36, 73 mit korrespondierenden Leitungen der weiteren Baueinheit 36 verbunden. Die Steuervorrichtung 1 stellt damit eine zweikreisige Steuervorrichtung dar mit einem Liftachsventil in der weiteren Baueinheit. Das Schaltventil 76 wird einerseits von dem Steuerdruck des Vorsteuerventils 83 und andererseits von dem Steuerdruck des Vorsteuerventils 84 beaufschlagt. Für den Fall korrespondierender Steuerdrücke nimmt das Schaltventil 76 die in Fig. 7 dargestellte Schaltstellung ein, in der die Verbindung zum Liftbalg 86 gesperrt ist und über die Schaltventile 74, 75 die Federbälge 80, 81 ebenfalls gesperrt sind. Überwiegt der Steuerdruck des Vorsteuerventils 84, so wird der Liftbalg 86 unter sinnvoller Druckbegrenzung belüftet, wobei währenddessen über die Schaltventile 74, 75 eine Kopplung der Federbälge 80, 81 erfolgt. Überwiegt hingegen der Steuerdruck des Vorsteuerventils 83, so wird der Liftbalg 86 mit den Schaltventilen 75, 74 gesperrt, während diese gleichzeitig die Federbälge 80, 81 mit den Federbälgen 43, 44 verbinden.

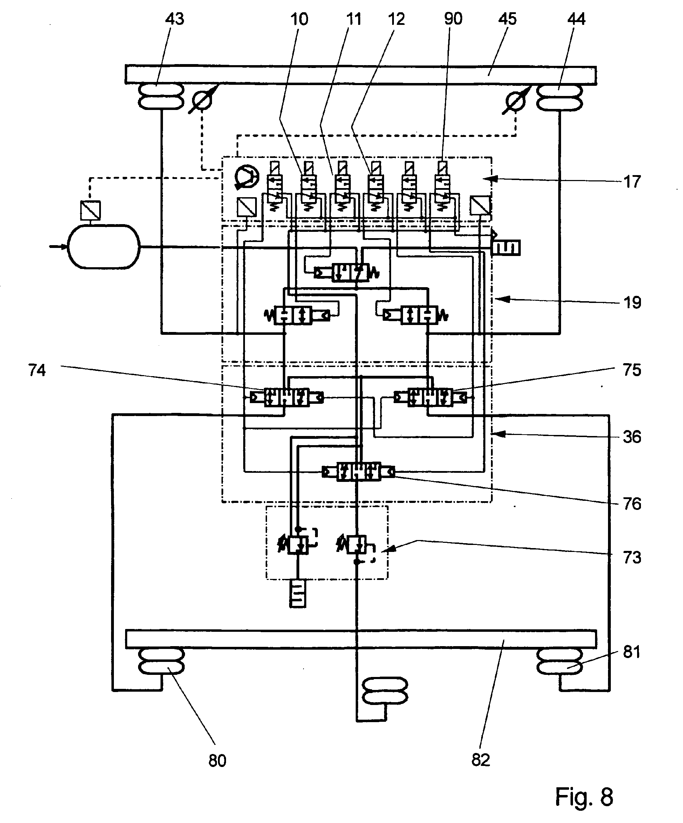

Während somit gemäß Fig. 7 die Schaltstellungen der Schaltventile 74, 75, 76 miteinander gekoppelt sind, da diese denselben Steuerdrücken der Vorsteuerventile 83, 84 ausgesetzt sind, ist gemäß **Fig. 8** ein weiteres Vorsteuerventil 90 vorgesehen, über welches das Schaltventil 76 anstelle durch den Steuerdruck des Vorsteuerventils 84 gemäß Fig. 7 separat angesteuert werden kann.

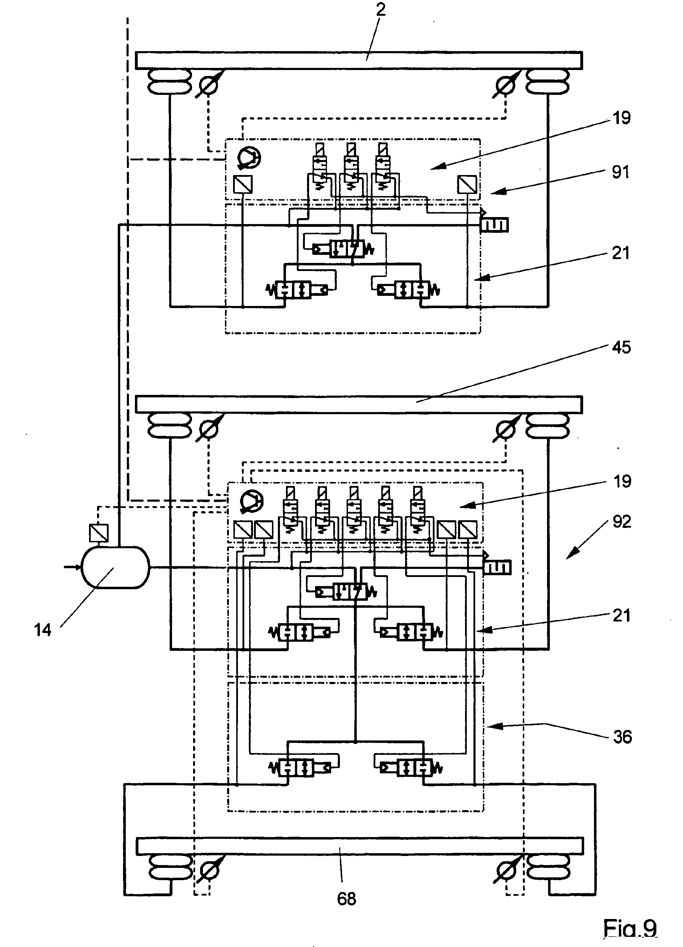

**Fig. 9** zeigt eine vorteilhafte Kombination von zwei erfindungsgemäßen Steuervorrichtungen zur Bereitstellung einer Vollluftfederung, bei der eine Steuervorrichtung 91 mit einer zentralen Baueinheit 19 und einer zusätzlichen Baueinheit 21 einer Vorderachse 2 zugeordnet ist, die ungefähr entsprechend Fig. 2 ausgebildet ist.

Darüber hinaus ist gemäß Fig. 9 eine weitere Steuervorrichtung 92 vorgesehen, welche einer Hinterachse 45 und einer Zusatzachse 68 zugeordnet ist. Die Steuervorrichtung 92 weist ebenfalls eine zentrale Baueinheit 19 und eine zusätzliche Baueinheit 21 sowie eine weitere Baueinheit 36 auf. Die Steuervorrichtung 92 ist hierbei im Wesentlichen entsprechend Fig. 6 ausgebildet. Die Steuervorrichtungen 91, 92 sind über entsprechende Vorratsleitungen an denselben Vorratsbehälter 14 oder unterschiedliche Vorratsbehälter angeschlossen. Die zentralen Baueinheiten 19 kommunizieren mit ihren jeweiligen Steuereinheiten miteinander über eine Signalverbindung 93. Die Signalverbindung 93 kann darüber hinaus mit weiteren Steuervorrichtungen oder Steuereinheiten über eine weitere Signalverbindung 94 verbunden sein, beispielsweise über einen CAN-Bus mit einer zentralen Steuereinheit eines Nutzfahrzeugs.

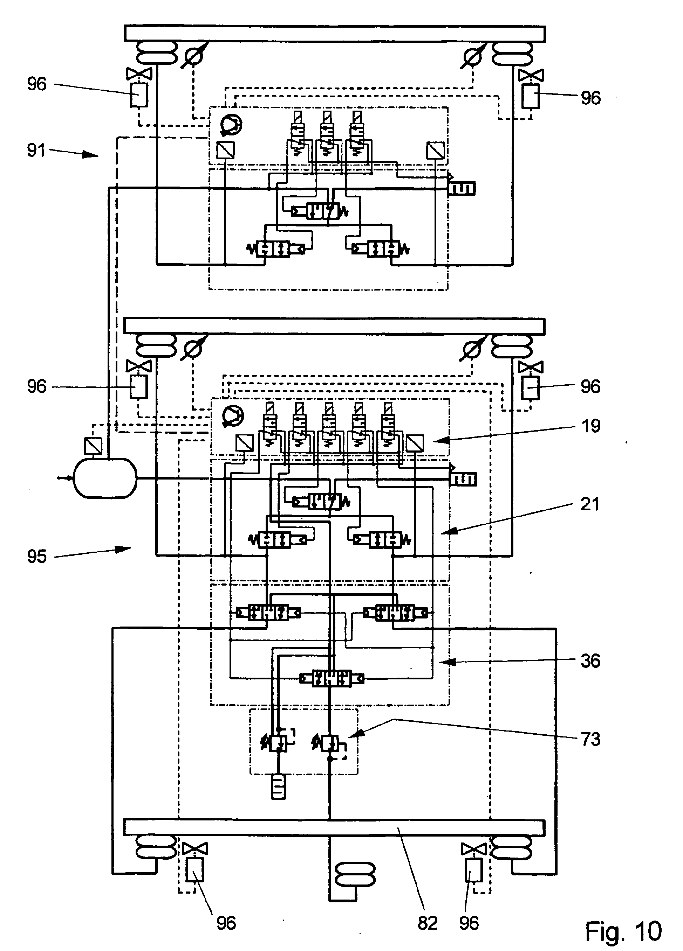

**Fig. 10** zeigt ein weiteres Ausführungsbeispiel einer Vollluftfederung, bei welchem eine Steuervorrichtung 91 gemäß Fig. 9 mit einer Steuervorrichtung 95 zusammenwirkt, die mit einer Hinterachse 45 und einer Liftachse 82 zusammenwirkt. Hierbei ist die Steuervorrichtung 95 ungefähr entsprechend der in Fig. 7 dargestellten Steuervorrichtung ausgebildet. Zusätzlich wird den Steuereinheiten 7 der zentralen Baueinheiten 19 jeweils ein Signal einer an einer zugeordneten Achse wirkenden Dämpfereinrichtung 96 zugeführt. Alternativ oder zusätzlich kann die Dämpfereinrichtung über die Steuereinheiten 7 oder eine der Steuereinheiten beeinflusst werden, beispielsweise bei einem hydraulischen Dämpfer durch eine Beeinflussung der Drosselwirkung nach Maßgabe eines elektrischen Signals.

Sofern in einem hier beschriebenen oder beanspruchten Merkmal von einem Bauelement, beispielsweise einem Ventil die Rede ist, soll dieses nicht die Verwendung von mehreren derartigen Bauelementen ausschließen.

### BEZUGSZEICHENLISTE

- 1: Steuervorrichtung
- 2: Vorderachse
- 3: Federbalg
- 4: Federbalg
- 5: Wegsensor
- 6: Wegsensor
- 7: Steuereinheit
- 8: Signalverbindung
- 9: Signalverbindung
- 10: Vorsteuerventil

- 11: Vorsteuerventil
- 12: Vorsteuerventil
- 13: Vorratsleitung
- 14: Vorratsbehälter
- 15: Entlüftung
- 16: Drucksensor
- 17: Signalverbindung
- 18: Drucksensor
- 19: zentralen Baueinheit
- 20: Schnittstelle

- 21: zusätzliche Baueinheit
- 22: Steuerleitung
- 23: Steuerleitung
- 24: Steuerleitung
- 25: Schaltventil
- 26: Achsleitung
- 27: Schaltventil
- 28: Linke Ausgangsleitung
- 29: Schaltventil
- 30: Rechte Ausgangsleitung

- 31: Schaltventil
- 32: Drossel
- 33: Druckleitung
- 34: Wegsensor
- 35: Schnittstelle
- 36: Weitere Baueinheit
- 37: Schaltventil
- 38: Hinterachsleitung
- 39: Steuerleitung
- 40: Vorsteuerventil

- 41: Schaltelement
- 42: Schaltelement
- 43: Federbalg
- 44: Federbalg
- 45: Hinterachse
- 46: Wegsensor
- 47: Wegsensor
- 48: Signalverbindung
- 49: Signalverbindung
- 50: Linke HA Ausgangsleitung

- 51: Rechte HA Ausgangsleitung
- 52: Drucksensor
- 53: Drucksensor
- 54: Leitungszweig
- 55: Schaltventil
- 56: Entlüftung
- 57: Vorsteuerventil
- 58: Steuerleitung
- 59: Vorsteuerventil
- 60: Steuerleitung
- 61: Zusatzachsleitung
- 62: Schaltventil
- 63: Schaltventil
- 64: Federbalg
- 65: Vorsteuerventil
- 66: Steuerleitung
- 67: Federbalg
- 68: Zusatzachse
- 69: Steuerleitung
- 70: Vorsteuerventil

- 71: Wegsensor
- 72: Wegsensor
- 73: Weitere Baueinheit
- 74: Schaltventil
- 75: Schaltventil
- 76: Schaltventil
- 77: Querverbindung
- 78: Ausgangsleitung LA
- 79: Ausgangsleitung LA
- 80: Federbalg

- 81: Federbalg
- 82: Liftachse
- 83: Vorsteuerventil
- 84: Vorsteuerventil
- 85: Druckbegrenzungsventil
- 86: Liftbalg
- 87: Restdruckventil
- 88: Schalldämpfer
- 89: Schnittstelle
- 90: Vorsteuerventil

- 91: Steuervorrichtung
- 92: Steuervorrichtung
- 93: Signalverbindung
- 94: Signalverbindung
- 95: Steuervorrichtung
- 96: Dämpfereinrichtung

## Patentansprüche

1. Steuervorrichtung für eine Luftfederungsanlage für ein Kraftfahrzeug mit einer elektrischen Steuereinheit (7), einem von der Steuereinheit (7) angesteuerten und elektrisch steuerbaren Vorsteuerventil (10; 11; 12; 40; 57; 59; 65; 70; 83; 84; 90) und einem mit dem Vorsteuerventil in pneumatischer Verbindung stehenden pneumatischen Schaltventil (27; 29; 31; 37; 41; 42; 62; 63; 74; 75; 76), wobei
a) eine zentrale Baueinheit (19) vorgesehen ist, welche die elektrische Steuereinheit (7) sowie das Vorsteuerventil (10; 11; 12; 40; 57; 59; 65; 70; 83; 84; 90) beinhaltet,
b) sowie eine zusätzliche Baueinheit (21) vorgesehen ist, die das pneumatische Schaltventil (27; 29; 31; 37; 41; 42; 62; 63; 74; 75; 76) beinhaltet,
c) wobei die zusätzliche Baueinheit (21) an der zentralen Baueinheit (19) befestigbar ausgebildet ist,
d) wobei die zentrale Baueinheit (19) einerseits und die zusätzliche Baueinheit (21) andererseits je ein Gehäuse aufweisen, **dadurch gekennzeichnet, dass**
e) das Gehäuse der zentralen Baueinheit (19) dicht ausgebildet ist und
f) die Gehäuse der zentralen Baueinheit (19) und der zusätzlichen Baueinheit (21) eine Schnittstelle (20) aufweisen, über die innenliegende pneumatische Leitungen (22; 23; 24; 33; 58; 39) automatisch mit einer Befestigung der Baueinheiten (19, 21) miteinander verbindbar sind.

2. Steuervorrichtung nach Anspruch 1, **dadurch gekennzeichnet, dass** die Steuereinheit (7) mit einem Sensor (5; 6; 16; 18; 34; 46; 47; 52; 53; 71; 72) in Signalverbindung steht, welcher ein Drucksignal und/oder ein Wegsignal erfasst und in der zentralen Baueinheit (19), in der zusätzlichen Baueinheit (21) oder dezentral angeordnet ist.

3. Steuervorrichtung nach Anspruch 1 oder 2, **dadurch gekennzeichnet, dass** eine weitere Baueinheit (36) vorgesehen ist, welche unmittelbar oder über die zusätzliche Baueinheit (21) an der zentralen Baueinheit (19) befestigt ist, pneumatische Schaltventile (41; 42; 55) aufweist und über pneumatische Leitungen (58; 39) mit der zentralen Baueinheit (19) verbunden ist.

4. Steuervorrichtung nach Anspruch 3, **dadurch gekennzeichnet, dass** die zusätzliche Baueinheit (21) ein Schaltventil (25) aufweist, über welches eine Be- und Entlüftungsverbindung sowohl der zusätzlichen Baueinheit (21) als auch der weiteren Baueinheit (36) herstellbar ist.

5. Steuervorrichtung nach Anspruch 3, **dadurch gekennzeichnet, dass** sowohl die zusätzliche Baueinheit (21) ein Schaltventil (25) aufweist, über welches eine Be- und Entlüftungsverbindung der zusätzlichen Baueinheit (21) herstellbar ist, als auch die weitere Baueinheit (36) ein Schaltventil (55) aufweist, über welches eine Be- und Entlüftungsverbindung der weiteren Baueinheit (36) herstellbar ist.

6. Steuervorrichtung nach Anspruch 3, **dadurch gekennzeichnet, dass** die zentrale Baueinheit (19), die zusätzliche Baueinheit (21) und/oder die weitere Baueinheit (36) jeweils einer Achse des Kraftfahrzeugs (Vorderachse 2; Hinterachse 45; Zusatzachse 68; Liftachse 82) zugeordnet sind.

7. Steuervorrichtung nach Anspruch 3, **dadurch gekennzeichnet, dass** die zusätzliche Baueinheit (21) und die weitere Baueinheit (36) jeweils zwei Sperrventile (27, 29; 41, 42) aufweisen, über die jeweils ein Federbalg (3, 4; 43, 44) einer Seite einer Fahrzeugachse be-und entlüftbar ist.

8. Steuervorrichtung nach Anspruch 7, **dadurch gekennzeichnet, dass** die Sperrventile (27, 29; 41, 42) der zusätzlichen Baueinheit (21) und/oder der weiteren Baueinheit (36) zwei jeweils einer Fahrzeugseite zugeordnete Ausgänge (28, 30; 50, 51) aufweisen, die über eine ständige Drossel (32) oder ein sperrbares Drosselventil (31) miteinander verbunden sind.

9. Steuervorrichtung nach einem der vorhergehenden Ansprüche, **dadurch gekennzeichnet, dass** eine Baueinheit (19; 21; 36) ein 3/3-Wegeventil (74, 75) aufweist, welches
- in einer ersten Schaltstellung die Federbälge (43, 44) einer Fahrzeugachse (45) mit den Federbälgen (80, 81) einer anderen Fahrzeugachse (82) verbindet,
- in einer zweiten Schaltstellung die Federbälge (80, 81) der der Baueinheit (36) zugeordneten Fahrzeugachse (82) sperrt und
- in einer dritten Schaltstellung die Federbälge (80, 81) der der Baueinheit (36) zugeordneten Fahrzeugachse (82) entlüftet.

10. Steuervorrichtung nach einem der vorhergehenden Ansprüche, **dadurch gekennzeichnet, dass** eine Baueinheit (36) ein 3/3-Wegeventil ((76)) aufweist, welches
- in einer ersten Schaltstellung einen Liftbalg (86) mit dem Vorratsbehälter (14) verbindet,
- in einer zweiten Schaltstellung den Liftbalg (86) sperrt und
- in einer dritten Schaltstellung den Liftbalg (86) entlüftet.

11. Steuervorrichtung nach Anspruch 9 oder 10, **dadurch gekennzeichnet, dass** die Entlüftung in der dritten Schaltstellung über ein Restdruckventil (87) erfolgt.

12. Steuervorrichtung nach Anspruch 10, **dadurch gekennzeichnet, dass** in der ersten Schaltstellung die Verbindung mit dem Vorratsbehälter (14) über ein Druckbegrenzungsventil (85) erfolgt.

13. Steuervorrichtung nach einem der vorhergehenden Ansprüche, **dadurch gekennzeichnet, dass** die Steuereinheit (7) der zentralen Baueinheit (19) mit einer Steuereinheit (7) einer weiteren Baueinheit (19; 21; 36; 73) in Signalverbindung steht.

14. Steuervorrichtung nach einem der vorhergehenden Ansprüche, **dadurch gekennzeichnet, dass** die Steuereinheit (7) mit einem regelbaren Dämpfungselement (96) in Signalverbindung steht.

15. Steuervorrichtung nach einem der vorhergehenden Ansprüche, **dadurch gekennzeichnet, dass** in der Steuervorrichtung mindestens ein Bauelement vorgesehen ist, welches gestaltet und konfigurieret ist zur
- Ermittlung einer Gesamtlast für eine Antriebsachse und eine weitere Fahrzeugachse,
- Einstellung des Drucks der Federbälge der Antriebsachse auf einen maximal zulässigen Druck und
- Einstellung eines verbleibenden Restdrucks an den Federbälgen der weiteren Fahrzeugachse, so dass sich aus der Summe der Drücke der Federbälge die Gesamtlast ergibt.

## Claims

1. Control device for an air suspension system for a vehicle comprising an electronic control unit (7), an electronically controlled pilot valve (10: 11; 12; 40; 57; 59; 65; 70; 83; 84; 90) controlled by the control unit (7) and a pneumatic switching valve (27; 29; 31; 37; 41; 42; 62; 63; 74; 75; 76) pneumatically connected with the pilot valve, wherein
a) a central unit (19) is provided housing the electronic control unit (7) and the pilot valve (10; 11; 12; 40; 57; 59; 65; 70; 83; 84; 90),
b) an additional unit (21) is provided housing the pneumatic switching valve (27; 29; 31; 37; 41; 42; 62; 63; 74; 75; 76),
c) the additional unit (21) is designed for being mounted with the central unit (19),
d) the central unit (19) and the additional unit (21) each comprise a housing,
**characterised by**
e) the housing of the central unit (19) being closed or sealed and
f) the housing of the central unit (19) and the additional unit (21) comprising an interface (20) for automatically connecting internal pneumatic conduits (22; 23; 24; 33; 58; 39) when mounting or assembling the units (19, 21) with each other.

2. Control device according to claim 1, wherein the control unit (7) comprises a signal link to a sensor (5; 6; 16; 18; 34; 46; 47; 52; 53; 71; 72), said sensor sensing a pressure signal and/or a level signal and said sensor being located in the central unit (19), in the additional unit (21) or remote, peripherally or locally.

3. Control device according to claim 1 or 2, wherein another unit (36) is provided which is directly or with interposition of the additional unit (21) mounted with the central unit (19), said unit (36) comprising pneumatical switching valves (41; 42; 55) and being connected by pneumatic conduits (58; 39) with the central unit (19).

4. Control device according to claim 3, wherein the additional unit (21) comprises a switching valve (25) used for establishing an aerating and de-aerating connection both with the additional unit (21) and the other unit (36).

5. Control device according to claim 3, wherein the additional unit (21) comprises a switching valve (25) for establishing an aerating and de-aerating connection with the additional unit (21) and the other unit (36) comprises a switching valve (55) for establishing an aerating and de-aerating connection with the other unit (36).

6. Control device according to claim 3, wherein the central unit (19), the additional unit (21) and/or the other unit (36) are related or associated with an axle of the vehicle (front axle 1; rear axle 45; additional axle 68; lifting axle 82).

7. Control device according to claim 3, wherein the additional unit (21) and the other unit (36) each comprise two shut-off valves (27, 29; 41, 42) for aerating and de-aerating an air suspension bellow (3, 4; 43, 44) of one side of a vehicle axle.

8. Control device according to claim 7, wherein the shut-off valves (27, 29; 41, 42) of the additional unit (21) and/or the other unit (36) comprise two exits (28, 30; 50, 51) designated to different sides of the vehicle, wherein the exits are connected with each other by a permanent throttle (32) or a shut-off throttle valve (31).

9. Control device according to one of claims 1 to 8, wherein a unit (19; 21; 36) comprises a 3/3-port valve (74, 75), said 3/3-port valve
- in a first switching state connecting the air suspension bellows (43, 44) of one vehicle axle (45) with the air suspension bellows (80, 81) of another vehicle axle (82),
- in a second switching state shutting off the air suspension bellows (80, 81) of the vehicle axle (82) related with the unit (36), and
- in a third switching state de-aerating the air suspension bellows (80, 81) of the vehicle axle (82) related with the unit (36).

10. Control device according to one of claims 1 to 9, wherein a unit (36) comprises a 3/3-port valve (76) which
- in a first switching state connects a lifting bellow (86) with the reservoir (14),
- in a second switching state shuts off the lifting bellow (86), and
- in a third switching state de-aerates the lifting bellow (86).

11. Control device according to claim 9 or 10, wherein the de-aerating In the third switching state is done via a residual pressure valve (87).

12. Control device according to claim 10, wherein in the first switching state the connection with the reservoir (14)includes a pressure restriction valve (85).

13. Control device according to one of claims 1 to 12, wherein the control device (7) of the central unit (19) stands in signal connection with a control unit (7) of another unit (19; 21; 36: 73).

14. Control device according to one of claims 1 to 13, wherein the control unit (7) stands in signal connection with a controllable damping element (96).

15. Control device according to one of claims 1 to 14, wherein in the control device at least one element Is provided which is designed and configured for
- determining the overall load of a driven axle and another vehicle axle,
- adjusting the pressure of the air suspension bellows of the driven axle to a maximal admissible pressure, and
- adjusting a remaining residual pressure at the air suspension bellows of the other or another vehicle axle,
such that the overall load correlates or corresponds to the sum of the pressures of the air suspension bellows.

## Revendications

1. Dispositif de commande pour un système de suspension pneumatique pour un véhicule automobile, comportant une unité de commande (7) électrique, une vanne pilote (10 ; 11 ; 12 ; 40 ; 57 ; 59 ; 65 ; 70 ; 83 ; 84 ; 90), activée par l'unité de commande (7) et apte à être commandée électriquement, et une soupape de commande (27 ; 29 ; 31 ; 37 ; 41 ; 42 ; 62 ; 63 ; 74 ; 75 ; 76) pneumatique reliée par voie pneumatique à la vanne pilote, dans lequel
a) il est prévu un module central (19), qui contient l'unité de commande (7) électrique, ainsi que la vanne pilote (10 ; 11 ; 12 ; 40 ; 57 ; 59 ; 65 ; 70 ; 83 ; 84 ; 90),
b) et il est prévu un module (21) supplémentaire, qui contient la soupape de commande (27 ; 29 ; 31 ; 37 ; 41 ; 42 ; 62 ; 63 ; 74 ; 75 ; 76) pneumatique,
c) ledit module (21) supplémentaire étant réalisé pour pouvoir être fixé au module central (19),
d) ledit module central (19), d'une part, et le module (21) supplémentaire, d'autre part, comportant chacun un carter,
**caractérisé en ce que**
e) le carter du module central (19) est réalisé de manière étanche et
f) le carter du module central (19) et celui du module (21) supplémentaire comportent une interface (20), par l'intermédiaire de laquelle des conduites pneumatiques (22 ; 23 ; 24 ; 33 ; 58 ; 39) intérieures peuvent être reliées entre elles automatiquement avec une fixation des modules (19, 21).

2. Dispositif de commande selon la revendication 1, **caractérisé en ce que** l'unité de commande (7) est reliée en transmission de signaux à un capteur (5 ; 6 ; 16 ; 18 ; 34 ; 46 ; 47 ; 52 ; 53 ; 71 ; 72) qui détecte un signal de pression et/ou un signal de déplacement et qui est disposé dans le module central (19), dans le module (21) supplémentaire ou de manière décentralisée.

3. Dispositif de commande selon la revendication 1 ou 2, **caractérisé en ce qu'**il est prévu un autre module (36), qui est fixé au module central (19) directement ou par l'intermédiaire du module (21) supplémentaire, qui comporte des soupapes de commande (41 ; 42 ; 55) pneumatiques et qui est relié au module central (19) via des conduites pneumatiques (58 ; 39).

4. Dispositif de commande selon la revendication 3, **caractérisé en ce que** le module (21) supplémentaire comporte une soupape de commande (25), qui permet d'établir une liaison d'admission d'air et d'évacuation d'air du module (21) supplémentaire, de même que de l'autre module (36).

5. Dispositif de commande selon la revendication 3, **caractérisé en ce que** le module (21) supplémentaire comporte une soupape de commande (25), qui permet d'établir une liaison d'admission d'air et d'évacuation d'air du module (21) supplémentaire, l'autre module (36) contient également une soupape de commande (55) qui permet d'établir une liaison d'admission d'air et d'évacuation d'air de l'autre module (36).

6. Dispositif de commande selon la revendication 3, **caractérisé en ce que** le module central (19), le module (21) supplémentaire et/ou l'autre module (36) sont associés respectivement à un essieu du véhicule automobile (essieu avant 2 ; essieu arrière 45 ; essieu supplémentaire 68 ; essieu relevable 82).

7. Dispositif de commande selon la revendication 3, **caractérisé en ce que** le module (21) supplémentaire et l'autre module (36) comportent chacun deux vannes d'arrêt (27, 29 ; 41, 42), qui permettent chacune d'effectuer une admission d'air et une évacuation d'air d'un coussin d'air pneumatique (3, 4 ; 43, 44) d'un côté d'un essieu de véhicule.

8. Dispositif de commande selon la revendication 7, **caractérisé en ce que** les vannes d'arrêt (27, 29 ; 41, 42) du module (21) supplémentaire et/ou de l'autre module (36) comportent deux sorties (28, 30 ; 50, 51), qui sont associées chacune à un côté du véhicule et qui sont reliées entre elles via un étranglement permanent (32) ou une vanne d'étranglement (31) pouvant être fermée.

9. Dispositif de commande selon l'une quelconque des revendications précédentes, **caractérisé en ce qu'**un module (19 ; 21 ; 36) comporte une vanne à 3/3 voies (74, 75), qui
- dans une première position de commande, relie les coussins d'air pneumatiques (43, 44) d'un essieu (45) aux coussins d'air pneumatiques (80, 81) d'un autre essieu (82),
- dans une deuxième position de commande, obture les coussins d'air pneumatiques (80, 81) de l'essieu (82) associé au module (36), et
- dans une troisième position de commande, évacue l'air des coussins d'air pneumatiques (80, 81) de l'essieu (82) associé au module (36).

10. Dispositif de commande selon l'une quelconque des revendications précédentes, **caractérisé en ce qu'**un module (36) comporte une vanne à 3/3 voies (76), qui
- dans une première position de commande, relie un essieu relevable (86) à un réservoir de stockage (14),
- dans une deuxième position de commande, bloque l'essieu relevable (86), et
- dans une troisième position de commande, évacue l'air de l'essieu relevable (86).

11. Dispositif de commande selon la revendication 9 ou 10, **caractérisé en ce que** l'évacuation de l'air dans la troisième position de commande est effectuée via une soupape de pression résiduelle (87).

12. Dispositif de commande selon la revendication 10, **caractérisé en ce que** la liaison avec le réservoir de stockage (14) dans la première position de commande est effectuée via une soupape de limitation de pression (85).

13. Dispositif de commande selon l'une quelconque des revendications précédentes, **caractérisé en ce que** l'unité de commande (7) du module central (19) est reliée en transmission de signaux avec une unité de commande (7) d'un autre module (19 ; 21 ; 36 ; 73).

14. Dispositif de commande selon l'une quelconque des revendications précédentes, **caractérisé en ce que** l'unité de commande (7) est reliée en transmission de signaux à un élément d'amortissement (96) réglable.

15. Dispositif de commande selon l'une quelconque des revendications précédentes, **caractérisé en ce que** dans le dispositif de commande est prévu au moins un élément qui est conçu et configuré pour
- déterminer une charge totale pour un essieu moteur et un autre essieu du véhicule,
- régler la pression des coussins d'air pneumatiques de l'essieu moteur à une pression admissible au maximum, et
- régler une pression résiduelle restante dans les coussins d'air pneumatiques de l'autre essieu du véhicule,
de telle sorte que la charge totale résulte de la somme des pressions des coussins d'air pneumatiques.
